# EUROPEAN PATENT SPECIFICATION

(11) **EP 4 664 222 B1**
(45) Date of publication and mention of the grant of the patent: **02.12.2026**
(21) Application number: 23928525.7
(22) Date of filing: 17.03.2023
(51) Int. Cl.: G05D 1/243, G05D 1/686

(54) **CONTROL DEVICE, CONTROL METHOD, AND PROGRAM FOR CONTROLLING A MOBILE OBJECT SO AS TO AT LEAST TEMPORARILY LEAD A USER**
STEUERUNGSVORRICHTUNG, STEUERUNGSVERFAHREN UND PROGRAMM ZUR STEUERUNG EINES MOBILEN OBJEKTS, UM EINEN BENUTZER ZUMINDEST VORÜBERGEHEND ZU FÜHREN
DISPOSITIF DE COMMANDE, PROCÉDÉ DE COMMANDE ET PROGRAMME, DESTINÉ À COMMANDER UN OBJET MOBILE DE MANIÈRE À GUIDER, AU MOINS TEMPORAIREMENT, UN UTILISATEUR

(43) Date of publication of application: 17.12.2025
(73) Proprietor: HONDA MOTOR CO., LTD., Tokyo 105-8404 (JP)
(72) Inventor: MATSUZAKI, Sango, Wako-shi, Saitama 351-0193 (JP); KOMURO, Misa, Wako-shi, Saitama 351-0193 (JP)
(74) Representative: Kiwit, Benedikt
(86) International application number: PCT/JP2023/010663
(87) International publication number: WO 2024/194940

(56) References cited:
- JP-A- 2011 194 507
- JP-A- 2011 224 679
- JP-A- 2011 224 679
- JP-A- 2016 184 337
- JP-A- 2019 175 333
- JP-A- 2019 179 285
- US-A1- 2020 241 548

## Description

### TECHNICAL FIELD

The present invention relates to a control device, a control method, and a program.

### BACKGROUND ART

In recent years, mobile objects (called robots, micromobilities, and the like) that move autonomously while following a user for the purpose of transporting luggage of a user, or the like have been put into practical use. For example, JP 2020-201570 A discloses a technology for determining a path of an autonomous mobile device for moving parallel to a target to be followed when a sign of a change in the path of the target to be followed is detected.

JP 2011 - 194 507 A relates to a service providing apparatus and a service robot configured to identify a service target person. The system acquires movement directions and movement speeds of people, determines whether estimated movement trajectories interfere with a service area defined with reference to the robot, and selects a person as a service target on that basis.

JP 2011 - 224 679 A relates to a response robot configured to autonomously approach a person. The robot predicts a movement route of a person, generates a movement route of the robot, determines an intersection between both routes, and controls a response action depending on whether the intersection lies within an available area.

US 2020 / 0 241 548 A1 relates to a moving body that follows a user. A movement target is calculated on the basis of the user's position and orientation, and the moving body is controlled to move toward the calculated movement target while maintaining a relative position with respect to the user.

JP 2019 - 179 285 A relates to a moving body that follows a subject and moves toward a movement target calculated on the basis of the position and orientation of the subject. When the subject stops moving, a target range associated with the movement target is expanded in order to stabilize the behavior of the moving body.

### SUMMARY OF INVENTION

### Technical Problem

The technology described in Patent Document 1 relates to control of a mobile object to move parallel to a target to be followed. However, the conventional technology did not consider controlling a mobile object to lead a user such as a pedestrian (that is, to take into account the movement direction of the user and to travel ahead in the movement direction).

The present invention has been made in consideration of circumstances described above, and one of its objectives is to provide a control device, a control method, and a program that can appropriately control a mobile object to lead the user.

### Solution to Problem

A vehicle control device according to the present invention is defined in the appended independent claims. Advantageous aspects are defined in the dependent claims. Specific configurations and the corresponding advantages are as follows:
(1): A mobile object control device according to one aspect of the present invention, as defined in independent claim 1, is a control device of a mobile object that at least temporarily leads a user and includes an information acquisition unit configured to acquire information on a movement direction of the user, a region setting unit configured to set a predetermined region based on the mobile object, and a target position determination unit configured to determine a target position to which the mobile object will move on the basis of the movement direction and the predetermined region.
(2): In the aspect of (1) described above, the predetermined region is circle or an ellipse.
(3): In the aspect of (1) described above, the target position determination unit determines an intersection point between a straight line passing through the user and aligned along the movement direction and the predetermined region as the target position.
(4): In the aspect of (3) described above, the target position determination unit determines, when there are a plurality of intersection points between the straight line and the predetermined region, an intersection point in the movement direction that is farthest from the user as the target position.
(5): In the aspect of (3) described above, when there is no intersection point between the straight line and the predetermined region, the target position determination unit may determine a foot of a perpendicular line from the mobile object to the straight line as the target position.
(6): In the aspect of (1) described above, when the traveling control unit causes the mobile object to move to the target position, the information acquisition unit may reacquire information on the movement direction of the user, the region setting unit may reset a predetermined region based on the mobile object that has moved to the target position, and the target position determination unit may re-determine a target position to which the mobile object will move on the basis of the reacquired movement direction and the reset predetermined region.
(7): In the aspect of (1) described above, the region setting unit may change a parameter that defines the predetermined region in accordance with an appearance or a moving speed of the user.
(8): In the aspect of (1) described above, the region setting unit may change a parameter that defines the predetermined region in accordance with an input by the user.
(9): In the aspect of (1) described above, the region setting unit may change a parameter that defines the predetermined region in accordance with a degree of proximity of the user to the mobile object.
(10): In the aspect of (1) described above, the region setting unit may change a parameter that defines the predetermined region in accordance with a degree of congestion of a traveling environment in which the mobile object is traveling.
(11): A mobile object control method according to another aspect of the present invention, as defined in more detail in independent claim 7, includes, by a control device of a mobile object that at least temporarily leads a user, acquiring information on a movement direction of the user, setting a predetermined region based on the mobile object, determining a target position to which the mobile object will move on the basis of the movement direction and the predetermined region, and controlling a driving device attached to the mobile object so that the mobile object moves to the target position.
(12): A program according to still another aspect of the present invention, as defined in more detail in independent claim 8, causes a control device of a mobile object that at least temporarily leads a user to execute acquiring information on a movement direction of the user, setting a predetermined region based on the mobile object, determining a target position to which the mobile object will move on the basis of the movement direction and the predetermined region, and controlling a driving device attached to the mobile object so that the mobile object moves to the target position.

### Advantageous Effects of Invention

According to the aspects of (1) to (12) described above, it is possible to appropriately control a mobile object to lead a user.

According to the aspect of (6) described above, even if the mobile object is positioned behind the user, the mobile object can transition to leading of the user by repeatedly executing predetermined processing.

### BRIEF DESCRIPTION OF DRAWINGS

[FIG. 1] A diagram representing an example of a mobile object M including a control device 100 according to an embodiment.
[FIG. 2] A diagram representing an example of functional constituents of the mobile object M.
[FIG. 3] A diagram representing an example of a screen displayed by an HMI 30.
[FIG. 4] A diagram for describing a method of discretizing a movement direction of a user U.
[FIG. 5] A diagram representing an example of a predetermined region R set by a region setting unit 120.
[FIG. 6] A diagram representing an example of another situation in which the predetermined region R is set by the region setting unit 120.
[FIG. 7] A diagram representing an example of another situation in which the predetermined region R is set by the region setting unit 120.
[FIG. 8] A diagram representing an example of another situation in which the predetermined region R is set by the region setting unit 120.
[FIG. 9] A flowchart representing an example of a flow of processing executed by a control device 100.

### DESCRIPTION OF EMBODIMENTS

Hereinafter, an embodiment of a control device, a control method, and a program of the present invention will be described with reference to the drawings.

### [Overall configuration]

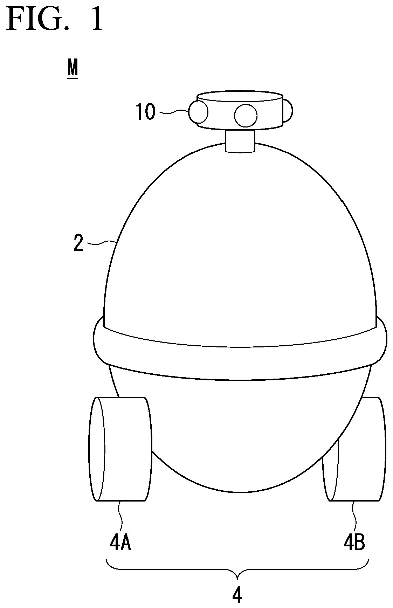

FIG. 1 is a diagram which shows an example of a mobile object M equipped with a control device according to an embodiment. The mobile object M is an autonomous mobile robot. The mobile object M supports a behavior of a user U. For example, the mobile object M stops at a position specified by the user U and guides the user U to the destination after receiving an input of a destination, or leads the user U (that is, travels ahead of the user U in a movement direction of the user U) on the basis of information on the movement direction of the user U without receiving an input of the destination. In this manner, in the present embodiment, it is described that the mobile object M guides or leads the user U as a pedestrian, but the mobile object M may be a vehicle on which the user U can ride, and in that case, may move to the destination with the user U on board after receiving an input of the destination by the user U.

The mobile object M includes, for example, a main body 2, one or more wheels 4 (4A and 4B in FIG. 1), and a camera 10. For example, the mobile object M recognizes a free space in which the mobile object M can travel on the basis of an image captured by the camera 10, and drives the wheels 4 so that they travel in the recognized free space to guide or lead the user U.

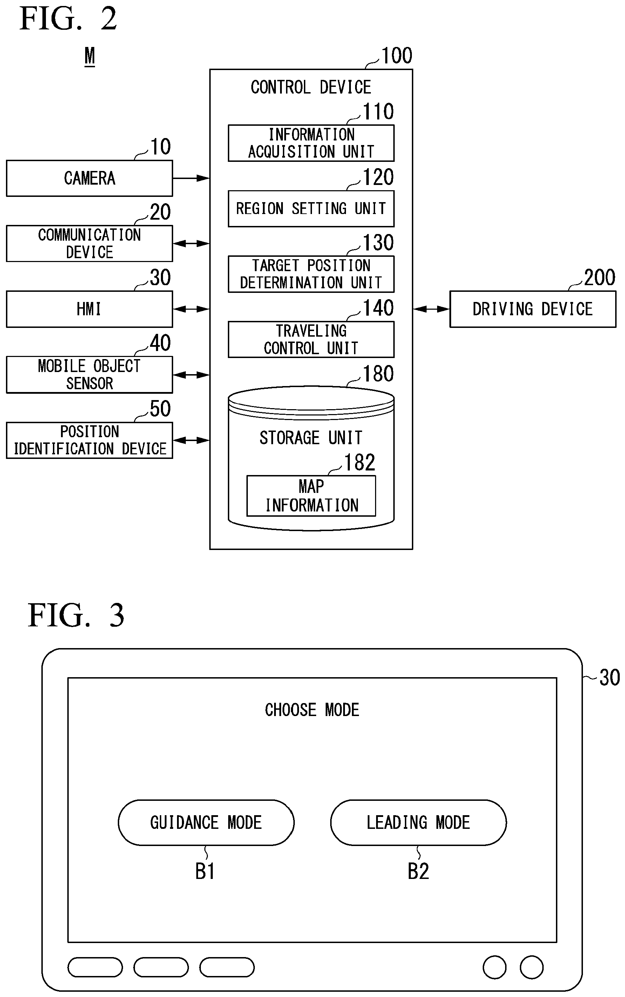

FIG. 2 is a diagram which shows an example of functional constituents of the mobile object M. The mobile object M includes, for example, a camera 10, a communication device 20, an HMI 30, a mobile object sensor 40, a position identification device 50, a control device 100, and a driving device 200.

The camera 10 captures images of a periphery of the mobile object M. The camera 10 is, for example, a fisheye camera capable of capturing images of the periphery of the mobile object M at a wide angle (for example, 360 degrees). The camera 10 is, for example, attached to a top of the mobile object M, and captures images of the periphery of the mobile object M at a wide angle in a horizontal direction. The camera 10 may be realized by combining a plurality of cameras (a plurality of cameras capturing images in a range of 120 degrees or 60 degrees in the horizontal direction). In addition to the camera 10, the mobile object M may be equipped with a radar device or LIDAR for detecting an object.

The communication device 20 is a communication interface for communicating with other devices using a cellular network, a Wi-Fi network, Bluetooth (registered trademark), DSRC (Dedicated Short Range Communication), or the like.

The HMI 30 presents various types of information to the user U of the mobile object M and receives an input operation by the user U. The HMI 30 includes various types of display devices, speakers, buzzers, touch panels, switches, keys, and the like attached to the mobile object M. Alternatively, functions of the HMI 30 may be mounted as an application program in a mobile terminal of the user U of the mobile object M. In this case, the mobile object M may present various types of information to the user U via the mobile terminal and receive an input operation by the user U.

FIG. 3 is a diagram which shows an example of a screen displayed by the HMI 30. As shown in FIG. 3, the HMI 30 displays, for example, a button B1 for causing the mobile object M to guide the user U, and a button B2 for causing the mobile object M to lead the user U. When the user U presses the button B1, the control device 100 sets the mobile object M to a guidance mode. More specifically, for example, the control device 100 displays an input field on the HMI 30 for inputting a destination, and upon receiving an input of a destination by the user U, identifies the destination by searching the map information 182 stored in the storage unit 180, and causes the mobile object M to travel from a current position identified by the position identification device 50 described below to the destination.

On the other hand, when the user U presses the button B2, the control device 100 sets the mobile object M to a leading mode. More specifically, for example, the control device 100 acquires information on the movement direction of the user U by a method described below, and leads the user U in the acquired movement direction. At this time, it should be noted that in leading, unlike guidance, a destination is not set. Leading is executed when the user U travels around a section such as a store or a shopping mall without clearly determining a destination. The HMI 30 may be able to adjust a moving speed of the mobile object M in leading by receiving an input of a parameter that defines a predetermined region R which will be described below. The mobile object M can lead the user U in a crowded area such as a store or shopping mall, thereby helping the user U, such as a person with poor mobility, to move comfortably through the area. In this manner, in the present embodiment, the control device 100 allows the user U to switch between the leading mode and the guidance mode of the mobile object M via the HMI 30. In this manner, the mobile object M according to the present embodiment can satisfy a wide variety of needs regarding the movement of the user U with a single housing.

The mobile object sensor 40 includes a vehicle speed sensor that detects a speed of the mobile object M, an acceleration sensor that detects the acceleration, a yaw rate sensor that detects the angular speed around the vertical axis, and a direction sensor that detects a direction of the mobile object M.

The position identification device 50 identifies a position of the mobile object M on the basis of signals received from GNSS satellites. The position of the mobile object M may be identified or supplemented by an inertial navigation system (INS) that uses an output of the mobile object sensor 40.

The control device 100 includes, for example, an information acquisition unit 110, a region setting unit 120, a target position determination unit 130, a traveling control unit 140, and a storage unit 180. The information acquisition unit 110, the region setting unit 120, the target position determination unit 130, and the traveling control unit 140 are each realized by, for example, a hardware processor such as a central processing unit (CPU) executing a program (software). In addition, some or all of these components may be realized by hardware (a circuit unit; including circuitry) such as large scale integration (LSI), an application specific integrated circuit (ASIC), a field-programmable gate array (FPGA), or a graphics processing unit (GPU), or may be realized by software and hardware in cooperation. The program may be stored in a storage unit 180 (a storage device having a non-transient storage medium) such as a HDD or flash memory, or may be stored in a removable storage medium such as a DVD or CD-ROM, and may be installed in the HDD or flash memory by attaching the storage medium (non-transient storage medium) to a drive device. Some of the functional units described above may be included in other devices.

The information acquisition unit 110 acquires information on the movement direction of the user U. More specifically, for example, the information acquisition unit 110 may acquire images including the user U captured by the camera 10 in a time series, and detect the movement direction of the user U on the basis of a positional change of the user U in the time series images. In addition, for example, the information acquisition unit 110 may detect key points (for example, eyes, nose, mouth, joints) of a body of the user U from a single image including the user U captured by the camera 10, and detect a direction of the detected key points as the movement direction of the user U. Moreover, for example, the information acquisition unit 110 may detect the movement direction of the user U by inputting an image into a learned model that has been learned to output the movement direction of a person when an image including the person is input.

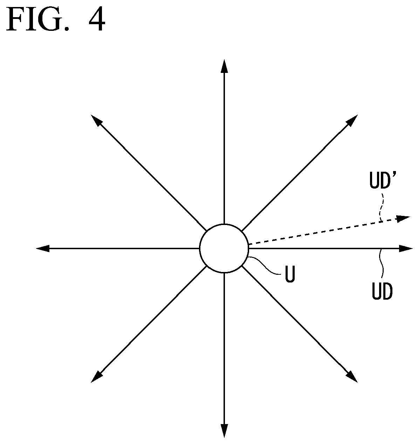

When the information acquisition unit 110 detects the movement direction of the user U, it may acquire the movement direction to be used in subsequent processing by discretizing the detected movement direction. FIG. 4 is a diagram for describing a method of discretizing the movement direction of the user U. As shown in FIG. 4, the information acquisition unit 110 may set, for example, candidates for a plurality of movement directions (eight in FIG. 4) based on the mobile object M, and acquire a candidate for a movement direction that forms a smallest angle with a detected movement direction UD' of the user U as a movement direction UD. As a result, it is possible to reduce a processing load on the control device 100.

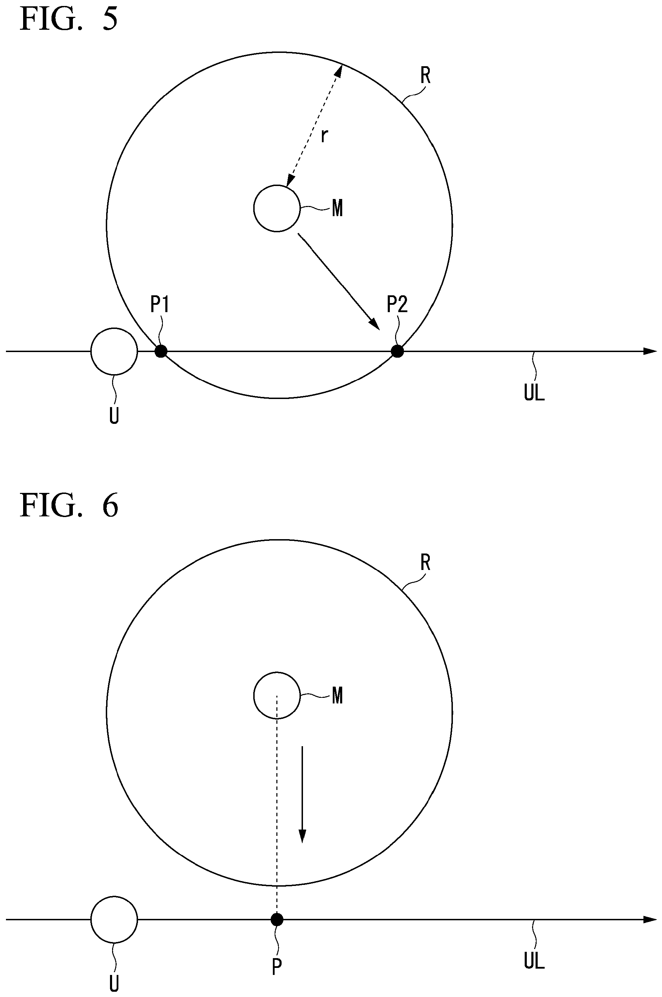

The region setting unit 120 converts the image including the user U captured by the camera 10 into a bird's-eye view coordinate system, and sets a predetermined region R in the bird's-eye view coordinate system with the mobile object M as a reference (for example, a center). FIG. 5 is a diagram which shows an example of the predetermined region R set by the region setting unit 120. FIG. 5 shows an image obtained by converting the image including the user U captured by the camera 10 into the bird's-eye view coordinate system. In FIG. 5, a symbol UL represents a straight line along the movement direction of the user U acquired by the information acquisition unit 110. As shown in FIG. 5, for example, the region setting unit 120 sets a circle with a radius r centered on the mobile object M as the predetermined region R. The radius r is an example of a "parameter that defines the predetermined region" in the claims. The predetermined region R is not limited to a circle, and may alternatively be an ellipse.

The target position determination unit 130 determines a target position to which the mobile object M will move, on the basis of the straight line UL along the movement direction of the user U and the predetermined region R set by the region setting unit 120. More specifically, the target position determination unit 130 determines, among intersection points P1 and P2 between the straight line UL and the predetermined region R, an intersection point P2 which is the farthest from the user U in the movement direction of the user U as the target position. When the straight line UL and the predetermined region R are in contact, the target position determination unit 130 determines a point of contact as the target position.

The traveling control unit 140 controls the driving device 200 so that the mobile object M moves to the target position determined by the target position determination unit 130. The driving device 200 includes, for example, a motor that drives drive wheels, a battery that stores power supplied to the motor, a steering device that adjusts a steering angle of steering wheels, and an electronic control unit (ECU) that controls these components. The ECU controls the components described above according to information input from the traveling control unit 140. The driving device 200 may include an internal combustion engine or a fuel cell as a driving force output means or a power generation means. In addition, the driving device 200 may further include a brake device that uses frictional force or air resistance.

With the configuration described above, the control device 100 acquires information on the movement direction of the user U on the basis of an image including the user U captured by the camera 10, and controls the mobile object M to lead the user U in consideration of the movement direction of the user U. That is, according to the present embodiment, the mobile object M can be appropriately controlled to lead the user.

### [Other situation related to region setting]

In FIG. 5, a situation is described in which the straight line UL along the movement direction of the user U and the predetermined region R set by the region setting unit 120 have one or more intersection points (at least being in contact). However, for example, when a distance between the user U and the mobile object M is large, the straight line UL and the predetermined region R do not necessarily have an intersection point. In addition, for example, even if the straight line UL and the predetermined region R have one or more intersection points, the intersection points are not necessarily present in front of the user U in the traveling direction. Hereinafter, an operation of the region setting unit 120 in a situation different from the situation shown in FIG. 5 will be described.

FIG. 6 is a diagram which shows an example of another situation in which the predetermined region R is set by the region setting unit 120. FIG. 6 represents a situation in which the predetermined region R set by the region setting unit 120 does not have an intersection point with the straight line UL. When the predetermined region R set by the region setting unit 120 does not have an intersection point with the straight line UL, the region setting unit 120 draws a perpendicular line from the mobile object M to the straight line UL and determines an intersection point of the perpendicular line and the straight line UL (that is, a foot of the perpendicular line) as a target position P. In other words, when the set predetermined region R does not have an intersection point with the straight line UL, the region setting unit 120 increases a value of the radius r until the predetermined region R comes in contact with the straight line UL, and determines the obtained point of contact as the target position P.

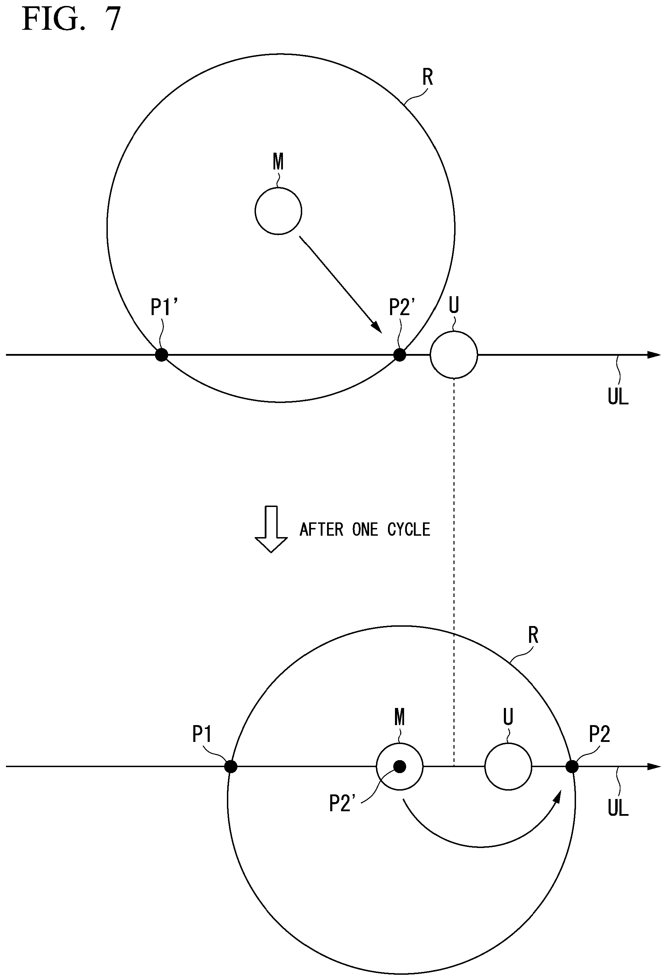

FIG. 7 is a diagram which shows an example of another situation in which the predetermined region R is set by the region setting unit 120. FIG. 7 represents a situation in which the predetermined region R set by the region setting unit 120 has two intersection points P1' and P2' with the straight line UL, but neither of the intersection points is present in the traveling direction of the mobile object M. At this time, as shown in an upper part of FIG. 7, the target position determination unit 130 first determines the intersection point P2', which is closer to the mobile object M, as the target position, and the traveling control unit 140 causes the mobile object M to travel to the determined target position P2'.

After that, when the mobile object M reaches the target position P2', the region setting unit 120 again sets a predetermined region R with the mobile object M as a reference for a next cycle of operations, and the target position determination unit 130 obtains intersection points P1 and P2 with the straight line UL. At this time, depending on a moving speed of the user U, as shown in a lower part of FIG. 7, the obtained intersection point P2 is in the movement direction of the user U. For this reason, the target position determination unit 130 determines the intersection point P2 as a target position of the mobile object M, and the traveling control unit 140 causes the mobile object M to travel to the determined target position P2. In other words, according to the present embodiment, even if the mobile object M is positioned behind the user U in the movement direction, the mobile object M can return to leading of the user U by the control device 100 repeating a control cycle.

In order for the mobile object M positioned behind the user U to reliably catch up with the user U and return to the leading, the traveling control unit 140 may control the traveling of the mobile object M so that a traveling speed of the mobile object M always exceeds the moving speed of the user U while the mobile object M is positioned behind the user U. When the control device 100 repeats the control cycle described above while the traveling speed of the mobile object M always exceeds the moving speed of the user U, the mobile object M can reliably return to the leading of the user U. As another method, when an intersection point between the set predetermined region R and the straight line UL is not present in the movement direction of the user U, the region setting unit 120 may increase a value of the radius r until the intersection point is positioned in the movement direction of the user U, and determine the intersection point obtained in the movement direction of the user U as the target position P.

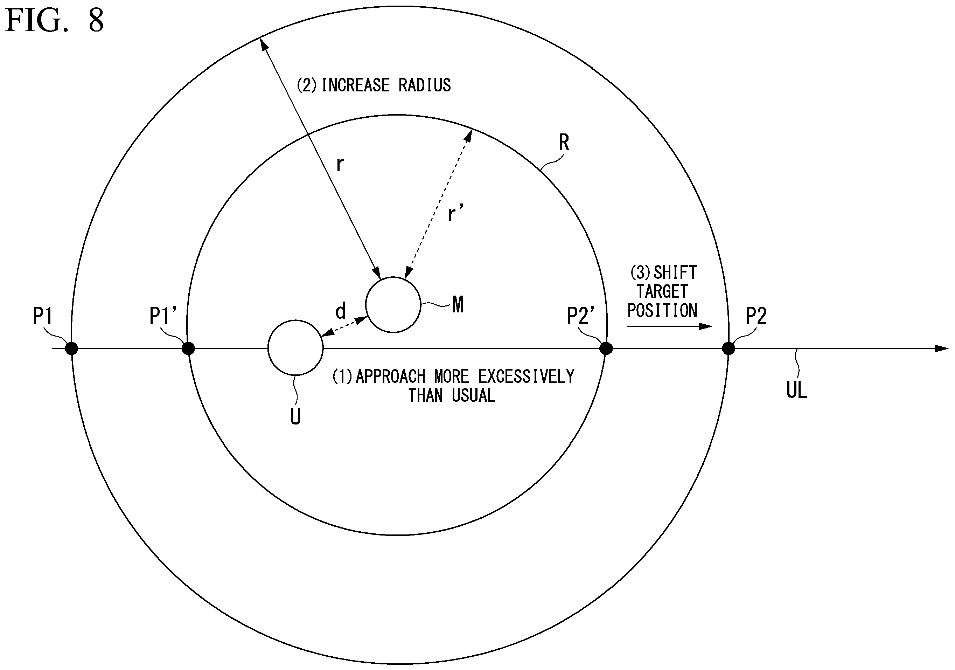

FIG. 8 is a diagram which shows an example of another situation in which the region setting unit 120 sets the predetermined region R. While leading the user U, the control device 100 measures an average distance between the user U and the mobile object M, and when a distance d between the user U and the mobile object M significantly deviates from the average distance, the control device 100 may adjust a distance traveled by the mobile object M per unit time (that is, the moving speed) by changing the value of the radius r. The distance d is an example of the "degree of proximity" in the claims.

For example, as shown in FIG. 8, when the distance d between the user U and the mobile object M becomes significantly smaller than the average distance (that is, when an interval between the average distance and the distance d is equal to or greater than a threshold value), the region setting unit 120 increases the value of the radius r, and the target position determination unit 130 shifts the target position P2' to the target position P2. As a result, the mobile object M is controlled to travel a longer distance in the same control cycle, and as a result, the moving speed of mobile object M increases. As a result, assuming that the moving speed of the user U is the same, the mobile object M will move away from the user U, and a comfortable distance for the user U can be maintained.

Similarly, when the distance d between the user U and the mobile object M becomes significantly larger than the average distance (that is, when the interval between the distance d and the average distance is equal to or greater than the threshold value), the region setting unit 120 decreases the value of the radius r, and the target position determination unit 130 shifts the target position P2 to the target position P2'. As a result, the mobile object M is controlled to travel a shorter distance in the same control cycle, and as a result, the moving speed of the mobile object M decreases. As a result, assuming that the moving speed of the user U is the same, the mobile object M will move closer to the user U, and a comfortable distance for the user U can be maintained. In addition, even if the user U increases or decreases the moving speed because he or she wishes to change the comfortable distance between the user U and the mobile object M, this increase or decrease is reflected in the average distance measured by the control device 100, so that this control can maintain a comfortable distance for the user U.

In another configuration, the region setting unit 120 may change the value of the radius r according to an appearance or the moving speed of the user U. For example, the region setting unit 120 may calculate an index value related to walking ability of the user U, such as an age or fatigue level, on the basis of an image including the user U captured by the camera 10, and set the value of the radius r to a smaller value to decrease the moving speed of the mobile object M as the calculated index value becomes lower. In addition, the region setting unit 120 may set the value of the radius r to a higher (lower) value to increase (decrease) the moving speed of the mobile object M as the measured moving speed of the user U becomes higher (lower). As a result, it is possible to prevent the user U from feeling uncomfortable due to the deviation of the moving speed of the mobile object M from his or her own moving speed.

As another configuration, the region setting unit 120 may change the value of the radius r according to a degree of congestion of a traveling environment in which the mobile object M is traveling. For example, when the image captured by the camera 10 includes a predetermined number or more of persons or obstacles other than the user U, the region setting unit 120 may set the value of the radius r to a small value and decrease the moving speed of the mobile object M. As a result, it is possible to reduce a risk of other pedestrians cutting in between the user U and the mobile object M, or a risk of the mobile object M coming into contact with other pedestrians.

Similarly, when the image captured by the camera 10 includes less than a predetermined number of persons or obstacles other than the user U, the region setting unit 120 may set the value of the radius r to a large value and increase the moving speed of the mobile object M. As a result, the user U can comfortably move in a section with a large free space.

### [Control flow]

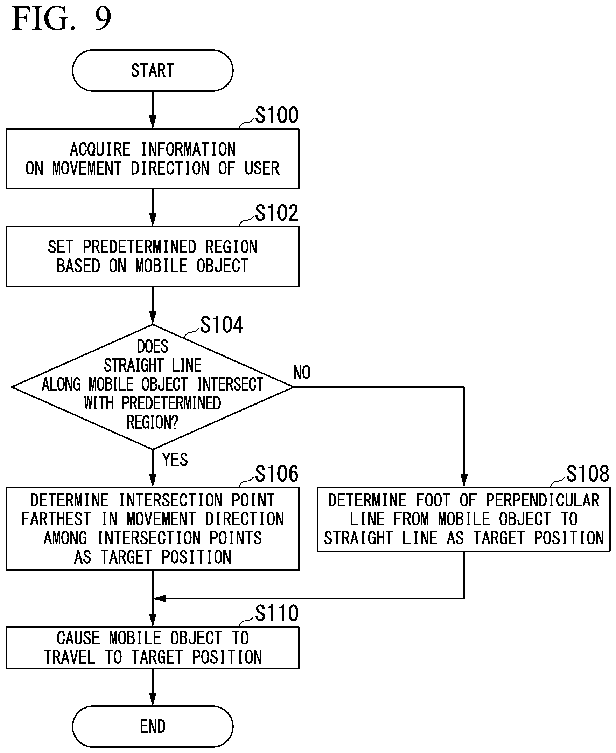

Next, referring to FIG. 9, a flow of processing executed by the control device 100 will be described. FIG. 9 is a flowchart which shows an example of the flow of processing executed by the control device 100. Processing of the flowchart shown in FIG. 9 is executed, for example, when the user U sets the leading mode on the HMI 30.

First, the information acquisition unit 110 acquires information on the movement direction of the user U (step S100). Next, the region setting unit 120 sets a predetermined region R based on the mobile object M (step S102). Next, the target position determination unit 130 determines whether a straight line UL along the movement direction of the user U intersects with the predetermined region R (step S104).

When it is determined that the straight line UL intersects with the predetermined region R, the target position determination unit 130 determines an intersection point farthest from the user U in the movement direction of the user U as the target position (step S106). On the other hand, when it is determined that the straight line UL does not intersect with the predetermined region R, the target position determination unit 130 determines the foot of the perpendicular line from the mobile object M to the straight line UL as the target position (step S108). Next, the traveling control unit 140 causes the mobile object M to travel to the determined target position (step S110). As a result, the processing of this flowchart will end.

In this embodiment, an example has been described in which the guidance mode and the leading mode are set to be switchable for the mobile object M, and the control device 100 constantly executes leading of the mobile object M while the guidance mode is set for the mobile object M. However, the present invention is not limited to such a configuration, and the present invention can be applied to cases where the mobile object M at least temporarily leads the user. For example, when the mobile object M travels alongside the user or follows the user and detects a predetermined situation (for example, a presence of an obstacle or a congestion of a traffic condition) in a traveling direction of the user, the mobile object M may temporarily lead the user by executing an algorithm of the present invention.

According to the present embodiment described above, the control device acquires information on the movement direction of the user, sets a predetermined region based on the mobile object, determines a target position to which the mobile object will move on the basis of the movement direction and the predetermined region, and causes the mobile object to travel to the target position. As a result, it is possible to appropriately control the mobile object so that it leads the user.

The embodiment described above can be expressed as follows.

A mobile object control device that leads a user is configured to include a storage medium that stores computer-readable instructions, and a processor connected to the storage medium, in which the processor executes the computer-readable instructions to acquire information on a movement direction of the user, set a predetermined region based on the mobile object, determine a target position to which the mobile object will move on the basis of the movement direction and the predetermined region, and control a driving device attached to the mobile object so that the mobile object moves to the target position.

The above describes a form for carrying out the present invention using an embodiment, but the present invention is not limited to such an embodiment, and various modifications and substitutions can be made within a range that does not deviate from the gist of the present invention.

### REFERENCE SIGNS LIST

10 Camera
100 Control device
110 Information acquisition unit
120 Region setting unit
130 Target position determination unit
140 Traveling control unit

## Claims

1. A control device (100) for controlling a mobile object (M) so as to at least temporarily lead a user (U), comprising:
an information acquisition unit (110) configured to acquire information on a movement direction (UD) of a user (U);
a region setting unit (120) configured to set a predetermined region (R), which is a circle or an ellipse, with the mobile object (M) as a reference;
a target position determination unit (130) configured to determine a target position (P2) to which the mobile object (M) will move on the basis of the movement direction (UD) and the predetermined region (R); and
a traveling control unit (140) configured to control a driving device (200) attached to the mobile object (M) so that the mobile object (M) moves to the target position (P2),
wherein, under one of the following situations,
the target position determination unit (130) is configured to determine an intersection point (P1, P2) between a straight line passing through the user (U) and aligned along the movement direction (UD) and the predetermined region (R) as the target position (P2), or
when there are a plurality of intersection points (P1, P2) between the straight line and the predetermined region (R), an intersection point (P1, P2) in the movement direction (UD) that is farthest from the user (U) as the target position, and
wherein the control device (100) is configured such that, when the mobile object (M) reaches the target position (P2), the information acquisition unit (110) re-acquires information on the movement direction (UD) of the user (U), the region setting unit (120) resets a predetermined region (R) with the mobile object (M) as a reference, and the target position determination unit (130) re-determines a target position (P2) to which the mobile (M) object will move on the basis of the reacquired movement direction (UD) and the reset predetermined region (R).

2. The control device (100) according to claim 1,
wherein, when there is no intersection point (P1, P2) between the straight line and the predetermined region (R), the target position determination unit (130) is configured to determine a foot of a perpendicular line from the mobile object (M) to the straight line as the target position (P2).

3. The control device (100) according to claim 1,
wherein the region setting unit (120) is configured to change a parameter that defines the predetermined region (R) in accordance with an appearance or a moving speed of the user (U).

4. The control device (100) according to claim 1,
wherein the region setting unit (120) is configured to change a parameter that defines the predetermined region (R) in accordance with an input by the user (U).

5. The control device (100) according to claim 1,
wherein the region setting unit (120) is configured to change a parameter that defines the predetermined region (R) in accordance with a degree of proximity of the user (U) to the mobile object (M).

6. The control device (100) according to claim 1,
wherein the region setting unit (120) is configured to change a parameter that defines the predetermined region (R) in accordance with a degree of congestion of a traveling environment in which the mobile object (M) is traveling.

7. A control method comprising:
by a control device (100) for controlling a mobile object (M) so as to at least temporarily lead a user (U),
acquiring information on a movement direction (UD) of a user (U),
setting a predetermined region, which is a circle or an ellipse, with the mobile object (M) as a reference,
determining a target position (P2) to which the mobile object (M) will move on the basis of the movement direction (UD) and the predetermined region (R), and
controlling a driving device (200) attached to the mobile object (M) so that the mobile object (M) moves to the target position (P2),
determining, under one of the following situations,
an intersection point (P1, P2) between a straight line passing through the user (U) and aligned along the movement direction (UD) and the predetermined region (R) as the target position (P2), or,
when there are a plurality of intersection points (P1, P2) between the straight line and the predetermined region (R), an intersection point (P1, P2) in the movement direction (UD) that is farthest from the user (U) as the target position (P2), and
when the mobile object (M) reaches the target position (P2), re-acquiring information on the movement direction (UD) of the user (U), resetting a predetermined region (R) with the mobile object (M) as a reference, and re-determining a target position (P2) to which the mobile object (M) will move on the basis of the reacquired movement direction (UD) and the reset predetermined region (R).

8. A computer program comprising instructions which, when the program is executed by a computer, causes a control device (100) to control a mobile object (M) so as to at least temporarily lead a user (U) by executing:
acquiring information on a movement direction (UD) of the user (U),
setting a predetermined region (R), which is a circle or an ellipse, with the mobile object (M) as a reference,
determining a target position (P2) to which the mobile object (M) will move on the basis of the movement direction (UD) and the predetermined region (R), and
controlling a driving device (200) attached to the mobile object (M) so that the mobile object (M) moves to the target position (P2),
determining, under one of the following situations,
an intersection point between a straight line passing through the user (U) and aligned along the movement direction (UD) and the predetermined region (R) as the target position (P2), or,
when there are a plurality of intersection points (P1, P2) between the straight line and the predetermined region (R), an intersection point in the movement direction (UD) that is farthest from the user (U) as the target position (P2), and
when the mobile object (M) reaches the target position (P2), re-acquiring information on the movement direction (UD) of the user (U), resetting a predetermined region (R) with the mobile object (M) as a reference, and re-determining a target position (P2) to which the mobile object (M) will move on the basis of the reacquired movement direction (UD) and the reset predetermined region (R).

## Patentansprüche

1. Eine Steuervorrichtung (100) zum Steuern eines beweglichen Objekts (M), um einen Benutzer (U) zumindest vorübergehend zu führen, aufweisend:
eine Informationserfassungseinheit (110), die so ausgebildet ist, dass sie Information über eine Bewegungsrichtung (UD) eines Benutzers (U) erfasst;
eine Bereichsfestlegungseinheit (120), die so ausgebildet ist, dass sie einen vorgegebenen Bereich (R), bei dem es sich um einen Kreis oder eine Ellipse handelt, mit dem beweglichen Objekt (M) als Bezugspunkt festlegt;
eine Zielpositionsbestimmungseinheit (130), die so ausgebildet ist, dass sie, auf der Grundlage der Bewegungsrichtung (UD) und des vorgegebenen Bereichs (R), eine Zielposition (P2) bestimmt, zu der sich das bewegliche Objekt (M) bewegen wird; und
eine Fahrsteuereinheit (140), die so ausgebildet ist, dass sie eine an dem beweglichen Objekt (M) angebrachte Antriebsvorrichtung (200) so steuert, dass sich das bewegliche Objekt (M) zu der Zielposition (P2) bewegt,
wobei, in einer der folgenden Situationen,
die Zielpositionsbestimmungseinheit (130) so ausgebildet ist, dass sie einen Schnittpunkt (P1, P2) zwischen einer durch den Benutzer (U) verlaufenden und entlang der Bewegungsrichtung (UD) ausgerichteten geraden Linie und dem vorgegebenen Bereich (R) als Zielposition (P2) bestimmt, oder,
wenn zwischen der geraden Linie und dem vorgegebenen Bereich (R) mehrere Schnittpunkte (P1, P2) existieren, einen in Bewegungsrichtung (UD) vom Benutzer (U) am weitesten entfernten Schnittpunkt (P1, P2) als Zielposition bestimmt, und
wobei die Steuervorrichtung (100) so ausgebildet ist, dass, wenn das bewegliche Objekt (M) die Zielposition (P2) erreicht, die Informationserfassungseinheit (110) Information über die Bewegungsrichtung (UD) des Benutzers (U) erneut erfasst, die Bereichsfeststellungseinheit (120) einen vorgegebenen Bereich (R) mit dem beweglichen Objekt (M) als Bezugspunkt erneut festlegt und die Zielpositionsbestimmungseinheit (130), auf der Grundlage der erneut erfassten Bewegungsrichtung (UD) und des neu festgelegten vorgegebenen Bereichs (R), eine Zielposition (P2), zu der sich das bewegliche Objekt (M) bewegen wird, neu bestimmt.

2. Die Steuervorrichtung (100) nach Anspruch 1,
wobei, wenn zwischen der geraden Linie und dem vorgegebenen Bereich (R) kein Schnittpunkt (P1, P2) existiert, die Zielpositionsbestimmungseinheit (130) so ausgebildet ist, dass sie den Fuß einer senkrechten Linie vom beweglichen Objekt (M) auf die gerade Linie als Zielposition (P2) bestimmt.

3. Die Steuervorrichtung (100) nach Anspruch 1,
wobei die Bereichsfestlegungseinheit (120) so ausgebildet ist, dass sie einen den vorgegebenen Bereich (R) entsprechend dem Auftreten oder der Bewegungsgeschwindigkeit des Benutzers (U) definierenden Parameter ändert.

4. Die Steuervorrichtung (100) nach Anspruch 1,
wobei die Bereichsfestlegungseinheit (120) so ausgebildet ist, dass sie einen den vorgegebenen Bereich (R) entsprechend einer Eingabe durch den Benutzer (U) definierenden Parameter ändert.

5. Die Steuervorrichtung (100) nach Anspruch 1,
wobei die Bereichsfestlegungseinheit (120) so ausgebildet ist, dass sie einen den vorgegebenen Bereich (R) entsprechend dem Grad der Nähe des Benutzers (U) zum beweglichen Objekt (M) definierenden Parameter ändert.

6. Die Steuervorrichtung (100) nach Anspruch 1,
wobei die Bereichsfestlegungseinheit (120) so ausgebildet ist, dass sie einen den vorgegebenen Bereich (R) entsprechend dem Ausmaß der Verkehrsüberlastung in einer Fahrumgebung, in der sich das mobile Objekt (M) bewegt, definierenden Parameter ändert.

7. Ein Steuerungsverfahren, aufweisend:
durch eine Steuervorrichtung (100) zur Steuerung eines beweglichen Objekts (M), um einen Benutzer (U) zumindest vorübergehend zu führen,
Erfassen von Information über eine Bewegungsrichtung (UD) eines Benutzers (U),
Festlegen eines vorgegebenen Bereichs, bei dem es sich um einen Kreis oder eine Ellipse handelt, mit dem beweglichen Objekt (M) als Bezugspunkt,
Bestimmen, auf der Grundlage der Bewegungsrichtung (UD) und des vorgegebenen Bereichs (R), einer Zielposition (P2), zu der sich das bewegliche Objekt (M) bewegen wird, und
Steuern einer am beweglichen Objekt (M) angebrachten Antriebsvorrichtung (200) so, dass sich das bewegliche Objekt (M) zur Zielposition (P2) bewegt,
Bestimmen, in einer der folgenden Situationen,
eines Schnittpunkts (P1, P2) zwischen einer durch den Benutzer (U) verlaufenden und entlang der Bewegungsrichtung (UD) ausgerichteten geraden Linie und dem vorgegebenen Bereich (R) als Zielposition (P2) oder,
wenn zwischen der geraden Linie und dem vorgegebenen Bereich (R) mehrere Schnittpunkte (P1, P2) existieren, eines in Bewegungsrichtung (UD) vom Benutzer (U) am weitesten entfernten Schnittpunkts (P1, P2) als Zielposition (P2), und
wenn das mobile Objekt (M) die Zielposition (P2) erreicht, erneutes Erfassen von Information über die Bewegungsrichtung (UD) des Benutzers (U), erneutes Festlegen eines vorgegebenen Bereichs (R) mit dem beweglichen Objekt (M) als Bezugspunkt und erneutes Bestimmen einer Zielposition (P2), zu der sich das bewegliche Objekt (M) bewegen wird, auf der Grundlage der erneut erfassten Bewegungsrichtung (UD) und des erneut festgelegten Bereichs (R).

8. Ein Computerprogramm, das Anweisungen aufweist, die, wenn das Programm von einem Computer ausgeführt wird, bewirken, dass eine Steuervorrichtung (100) ein mobiles Objekt (M) so steuert, dass ein Benutzer (U) zumindest vorübergehend geführt wird, indem Folgendes ausgeführt wird:
Erfassen von Information über eine Bewegungsrichtung (UD) des Benutzers (U),
Festlegen eines vorgegebenen Bereichs (R), bei dem es sich um einen Kreis oder eine Ellipse handelt, mit dem beweglichen Objekt (M) als Bezugspunkt,
Bestimmen, auf der Grundlage der Bewegungsrichtung (UD) und des vorgegebenen Bereichs (R), einer Zielposition (P2), zu der sich das bewegliche Objekt (M) bewegen wird, und
Steuern einer an dem beweglichen Objekt (M) angebrachten Antriebsvorrichtung (200) so, dass sich das bewegliche Objekt (M) zur Zielposition (P2) bewegt,
Bestimmen, in einer der folgenden Situationen,
eines Schnittpunkts zwischen einer durch den Benutzer (U) verlaufenden und entlang der Bewegungsrichtung (UD) ausgerichteten geraden Linie und dem vorgegebenen Bereich (R) als Zielposition (P2), oder,
wenn zwischen der geraden Linie und dem vorgegebenen Bereich (R) mehrere Schnittpunkte (P1, P2) existieren, erneutes Festlegen eines in Bewegungsrichtung (UD) am weitesten vom Benutzer (U) entfernt liegenden Schnittpunkts als Zielposition (P2), und,
wenn das bewegliche Objekt (M) die Zielposition (P2) erreicht, erneutes Erfassen von Information über die Bewegungsrichtung (UD) des Benutzers (U), erneutes Festlegen eines vorgegebenen Bereichs (R) mit dem beweglichen Objekt (M) als Bezugspunkt und, auf der Grundlage der erneut erfassten Bewegungsrichtung (UD) und des erneut festgelegten vorgegebenen Bereichs (R), erneutes Bestimmen einer Zielposition (P2), zu der sich das bewegliche Objekt (M) bewegen wird.

## Revendications

1. Dispositif de commande (100) pour la commande d'un objet mobile (M) de façon à guider au moins temporairement un utilisateur (U), comportant :
une unité d'acquisition d'informations (110) configurée pour acquérir des informations sur une direction de déplacement (UD) d'un utilisateur (U) ;
une unité d'établissement de région (120) configurée pour établir une région (R) prédéterminée, qui est un cercle ou une ellipse, avec l'objet mobile (M) comme référence ;
une unité de détermination de position cible (130) configurée pour déterminer une position cible (P2) vers laquelle l'objet mobile (M) se déplacera sur la base de la direction de déplacement (UD) et de la région prédéterminée (R) ; et
une unité de commande de circulation (140) configurée pour commander un dispositif d'entraînement (200) fixé à l'objet mobile (M) de sorte que l'objet mobile (M) se déplace vers la position cible (P2),
dans lequel, dans l'une des situations suivantes, l'unité de détermination de position cible (130) est configurée pour déterminer un point d'intersection (P1, P2) entre une ligne droite passant par l'utilisateur (U) et alignée le long de la direction de déplacement (UD) et la région prédéterminée (R) comme étant la position cible (P2), ou lorsqu'il existe une pluralité de points d'intersection (P1, P2) entre la ligne droite et la région prédéterminée (R), un point d'intersection (P1, P2) dans la direction de déplacement (UD) qui est le plus éloigné de l'utilisateur (U) comme étant la position cible, et
dans lequel le dispositif de commande (100) est configuré de sorte que, lorsque l'objet mobile (M) atteint la position cible (P2), l'unité d'acquisition d'informations (110) acquiert à nouveau des informations sur la direction de déplacement (UD) de l'utilisateur (U), l'unité d'établissement de région (120) établit à nouveau une région prédéterminée (R) avec l'objet mobile (M) comme référence, et l'unité de détermination de position cible (130) détermine à nouveau une position cible (P2) vers laquelle l'objet mobile (M) se déplacera sur la base de la direction de déplacement (UD) à nouveau acquise et de la région prédéterminée (R) à nouveau établie.

2. Dispositif de commande (100) selon la revendication 1,
dans lequel, lorsqu'il n'y a aucun point d'intersection (P1, P2) entre la ligne droite et la région prédéterminée (R), l'unité de détermination de position cible (130) est configurée pour déterminer un pied d'une ligne perpendiculaire de l'objet mobile (M) à la ligne droite comme étant la position cible (P2).

3. Dispositif de commande (100) selon la revendication 1,
dans lequel l'unité d'établissement de région (120) est configurée pour modifier un paramètre qui définit la région prédéterminée (R) conformément à un aspect ou à une vitesse de déplacement de l'utilisateur (U).

4. Dispositif de commande (100) selon la revendication 1,
dans lequel l'unité d'établissement de région (120) est configurée pour modifier un paramètre qui définit la région prédéterminée (R) conformément à une entrée par l'utilisateur (U).

5. Dispositif de commande (100) selon la revendication 1,
dans lequel l'unité d'établissement de région (120) est configurée pour modifier un paramètre qui définit la région prédéterminée (R) conformément à un degré de proximité de l'utilisateur (U) par rapport à l'objet mobile (M).

6. Dispositif de commande (100) selon la revendication 1,
dans lequel l'unité d'établissement de région (120) est configurée pour modifier un paramètre qui définit la région prédéterminée (R) conformément à un degré de congestion d'un environnement de circulation dans lequel l'objet mobile (M) circule.

7. Procédé de commande comportant :
par un dispositif de commande (100) pour la commande d'un objet mobile (M) de façon à guider au moins temporairement un utilisateur (U),
l'acquisition d'informations sur une direction de déplacement (UD) d'un utilisateur (U),
l'établissement d'une région prédéterminée, qui est un cercle ou une ellipse, avec l'objet mobile (M) comme référence,
la détermination d'une position cible (P2) vers laquelle l'objet mobile (M) se déplacera sur la base de la direction de déplacement (UD) et de la région prédéterminée (R), et
la commande d'un dispositif d'entraînement (200) fixé à l'objet mobile (M) de sorte que l'objet mobile (M) se déplace vers la position cible (P2),
la détermination, dans l'une des situations suivantes, d'un point d'intersection (P1, P2) entre une ligne droite passant par l'utilisateur (U) et alignée le long de la direction de déplacement (UD) et la région prédéterminée (R) comme étant la position cible (P2), ou,
lorsqu'il existe une pluralité de points d'intersection (P1, P2) entre la ligne droite et la région prédéterminée (R), un point d'intersection (P1, P2) dans la direction de déplacement (UD) qui est le plus éloigné de l'utilisateur (U) comme étant la position cible (P2), et
lorsque l'objet mobile (M) atteint la position cible (P2), l'acquisition, à nouveau, d'informations sur la direction de déplacement (UD) de l'utilisateur (U), l'établissement, à nouveau, d'une région prédéterminée (R) avec l'objet mobile (M) comme référence, et la détermination, à nouveau, d'une position cible (P2) vers laquelle l'objet mobile (M) se déplacera sur la base de la direction de déplacement (UD) à nouveau acquise et de la région prédéterminée (R) à nouveau établie.

8. Programme d'ordinateur comportant des instructions qui, lorsque le programme est exécuté par un ordinateur, amènent un dispositif de commande (100) à commander un objet mobile (M) de façon à guider au moins temporairement un utilisateur (U) par l'exécution de :
l'acquisition d'informations sur une direction de déplacement (UD) de l'utilisateur (U),
l'établissement d'une région prédéterminée (R), qui est un cercle ou une ellipse, avec l'objet mobile (M) comme référence,
la détermination d'une position cible (P2) vers laquelle l'objet mobile (M) se déplacera sur la base de la direction de déplacement (UD) et de la région prédéterminée (R), et
la commande d'un dispositif d'entraînement (200) fixé à l'objet mobile (M) de sorte que l'objet mobile (M) se déplace vers la position cible (P2),
la détermination, dans l'une des situations suivantes, d'un point d'intersection entre une ligne droite passant par l'utilisateur (U) et alignée le long de la direction de déplacement (UD) et la région prédéterminée (R) comme étant la position cible (P2), ou,
lorsqu'il existe une pluralité de points d'intersection (P1, P2) entre la ligne droite et la région prédéterminée (R), un point d'intersection dans la direction de déplacement (UD) qui est le plus éloigné de l'utilisateur (U) comme étant la position cible (P2), et
lorsque l'objet mobile (M) atteint la position cible (P2), l'acquisition, à nouveau, d'informations sur la direction de déplacement (UD) de l'utilisateur (U), l'établissement, à nouveau, d'une région prédéterminée (R) avec l'objet mobile (M) comme référence, et la détermination, à nouveau, d'une position cible (P2) vers laquelle l'objet mobile (M) se déplacera sur la base de la direction de déplacement (UD) à nouveau acquise et de la région prédéterminée (R) à nouveau établie.
